(19) **Europäisches Patentamt**

**European Patent Office**

**Office européen des brevets**

(11) **EP 1 074 958 B1**

(12) **EUROPEAN PATENT SPECIFICATION**

(45) Date of publication and mention
of the grant of the patent:
**08.12.2004 Bulletin 2004/50**

(51) Int Cl.7: **G08G 1/00**

(21) Application number: **00115861.7**

(22) Date of filing: **24.07.2000**

(54) **Traffic congestion measuring method and device and applications thereof**

Verfahren und Vorrichtung zum Messen der Verkehrsüberlastung und Anwendungen dafür

Procédé et dispositif de mesure de la congestion du trafic et applications associées

(84) Designated Contracting States:
**DE FR GB**

(30) Priority: **23.07.1999 JP 20980299**

(43) Date of publication of application:
**07.02.2001 Bulletin 2001/06**

(73) Proprietor: **MATSUSHITA ELECTRIC INDUSTRIAL CO., LTD.**
**Kadoma-shi, Osaka 571-8501 (JP)**

(72) Inventors:
• **Onda, Katsumasa**
**Yokohama 246-0033 (JP)**
• **Kigasawa, Seiji**
**Yokohama 224-0054 (JP)**
• **Nishizawa, Masato**
**Yokohama 241-0801 (DE)**

(74) Representative:
**Manitz, Finsterwald & Partner GbR**
**Postfach 31 02 20**
**80102 München (DE)**

(56) References cited:
**EP-A- 0 747 870** **US-A- 5 729 216**
**US-A- 5 757 287**

• **PATENT ABSTRACTS OF JAPAN vol. 1998, no. 02, 30 January 1998 (1998-01-30) & JP 09 278301 A (MITSUBISHI ELECTRIC CORP;MITSUBISHI DENKI BILL TECHNO SERVICE KK), 28 October 1997 (1997-10-28)**
• **PATENT ABSTRACTS OF JAPAN vol. 1997, no. 08, 29 August 1997 (1997-08-29) & JP 09 107541 A (CLARION CO LTD), 22 April 1997 (1997-04-22)**

**Description**

BACKGROUND OF THE INVENTION

1. Field of the Invention

The invention relates to a method of and a system for measuring the degree of human or vehicle traffic congestion by using three-dimensional information in a monitor space, and to applications thereof.

2. Description of the Prior Art

An image recognition system which measure the degree of congestion in a monitor space is disclosed in a Japanese patent application No. HeilO-339,206, filed November 30, 1998, and assigned to the present assignee. The system measures the degree of congestion on the basis of the area where the brightness has changed or the number of pixels the brightness of which has changed by detecting time-based changes in the brightness of a video signal through the calculation of a frame difference or background difference. That is, the system judges the degree of congestion to be higher if the brightness-changed area is relatively large and lower if the brightness-changed area is relatively small. Since the system basically detects time-based changes, if a headlight from a vehicle or the shadow of a flying bird or airplane happens to fall into the monitor space, then they will be detected as brightness changes in the system. In order to exclude the influence of brightness changes which sporadically occur, the system is so configured as not to use the brightness-changed area calculated every video frame, as it is, for the judgement of the degree of congestion. Instead, the system is so configured as to use the average or the median of brightness-changed areas calculated for some frames.
However, using the average or the median of brightness-changed areas is not enough for excluding the above-mentioned influence, failing to yield a satisfactory measurement accuracy.
Also, if a place monitored by the above system is crowded with people and the people tend to stay still in the place, then the brightness in video frames will not change vary much with the passage of time. This causes the system to provide a low degree of congestion as the measurement result even if the monitored place is very crowded.
Japanese patent unexamined publication No. 09278301 discloses a device for controlling the operation of an elevator by detecting elevator waiting passengers in an elevator hall. The device discriminates between elevator waiting passengers and passing-only passengers by using area partitioning means for partitioning a stand-by area for elevator waiting passengers and a passing area for passing-only passengers on the image processing memory. The device detects a photographed image as a waiting passengers when the image is detected in the stand-by area. However, the detection of images in the stand-by area is done in a conventional manner. There is a room for devising a novel and advanced congestion measuring method.
EP-A-O 747 870 discloses a method and a device for observing a traffic flow on a road and for observing vehicles parking in a parking lot. Therefore pictures are taken by a plurality of cameras. Then in each of the taken pictures a characteristic portion is measured in three-dimensions and the three-dimensional coordinates are projected on a virtual perpendicular plane vertically standing on a plane contacting an object. An object is discriminated based on height data.
Existing elevator systems are controlled according to information gathered only from user's operation of button switches installed in each floor and within an elevator. However, since such systems do not utilize information on how many people are waiting for the elevator at each floor, they can not effectively carry waiting people at a crowded floor.
Existing traffic control systems are controlled according to information obtained by detecting whether any vehicle is waiting for a signal with a supersonic vehicle detector provided near the signal and/or information on the state of a push button switch for pedestrians. However, since information on the degree of human or vehicle congestion is not used in operation, the operation is not so optimized as to enable jostling vehicles and/or people to flow effectively..
There are various gate control systems such as follows. For example, an existing toll system provided along a toll road usually includes a plurality of tollgates. In such a system, an attendant judges the degree of vehicle congestion near the toll system by viewing with the eye. If the attendant judges the degree of vehicle congestion to be higher, then he or she opens the more tollgates. The gates furnished at the entrance to a parking lot of, for example, an amusement park are controlled in the same manner. These gates are not controlled automatically according to the degree of congestion at each gate.
The buses and the trains are serviced according to time schedules. It is desirable to control the bus or train operation by utilizing information on the degree of congestion at each of predetermined stops or stations.
In a taxicab company, congestion information is collected from taxi drivers via radio, and the dispatcher allocates cars to cabstands or cab zones which are crowded with taxi-waiting people according to the collected congestion information. In this case, it is desirable to collect the congestion information automatically from predetermined cab zones.

The invention has been made to solve the above and other problems and makes it an object to provide a congestion measuring method and a congestion measuring device which is not only capable of measuring the degree of human or vehicle congestion even when people or vehicles stay still, but also free from influence of brightness changes in a video signal which changes are caused by light or shade falling-in to the monitor space.

Another object of the invention is to provide various embodiments that incorporate the inventive congestion-measuring device.

SUMMARY OF THE INVENTION

According to an aspect of invention, a method of and a system for measuring a degree of congestion in a space covered by a pair of cameras is provided. Three-dimensional orthogonal coordinates are defined in the space such that one of the coordinates is parallel with the optical axes of the cameras. A value of the parallel coordinate for any point in the space is referred to as "3D information" of the point. In the method, parts of each of body images which parts exist above a virtual plane set at a predetermined height and within a predetermined height from the virtual plane are detected by using first 3D information and second 3D information of each image unit of the body images. The first 3D information is expressed in two-dimensional coordinates on pictures obtained from the cameras. The second 3D information is expressed in two-dimensional coordinates defined on the virtual plane. The degree of congestion is calculated on the basis of the detected parts.

In a preferred embodiment, the detected parts are projected on the virtual plane. Then, the degree of congestion is founded on the basis of the projected parts on the virtual plane.

There are disclosed various systems that incorporate a congestion measuring device according to the invention.

BRIEF DESCRIPTION OF THE DRAWING

The features and advantages of the present invention will be apparent from the following description of an exemplary embodiment of the invention and the accompanying drawings, in which:

FIG. 1 is a schematic block diagram showing an exemplary arrangement of an illustrative embodiment of a congestion-measuring device according to the invention;

FIG. 2 is a flowchart showing, in a simplified manner, an exemplary procedure of measuring the degree of congestion in accordance with a first illustrative embodiment of the invention;

FIG. 3 is a diagram for describing, in detail, the process executed in 3D-measurement step 220 of FIG. 2;

FIG. 4 is a diagram showing examples of left picture 11 and right picture 12 obtained through the arrangement of FIG. 3;

FIG. 5 is a diagram showing the way of extracting a body area for a person or vehicle in a monitor space from 3D information in the monitor space and 3D information in a virtual plane set in the 3D monitor space;

FIG. 6 is a 3D version of FIG. 5;

FIG. 7 is a diagram showing an exemplary virtual plane chart obtained by shooting the virtual plane 32;

FIG. 8 is a diagram showing a combination of the virtual plane chart 11a and a left picture 11 of a monitor space including the point P shown in FIGS. 5 and 6;

FIG. 9 is a diagram showing how a block that satisfies predetermined height conditions is detected from the blocks containing body image;

FIG. 10 is a diagram showing steps which, when combined with FIG. 2, constitute a flowchart of an exemplary procedure of measuring the degree of congestion in accordance with a second illustrative embodiment of the invention;

FIG. 11 is a diagram showing, in three dimensions, the process of recognizing the object to be taken into account for determining the degree of congestion according to the second illustrative embodiment of the invention;

FIG. 12 is a diagram showing the way of projecting a detected block 50 on the virtual plane 32 three-dimensionally;

FIG. 13 is an illustration showing an exemplary arrangement of an elevator system that incorporates a congestion-measuring device according to the invention;

FIG. 14 is an illustration showing an exemplary arrangement of a signal system that incorporates a congestion-measuring device according to the invention;

FIG. 15 is an illustration showing an exemplary arrangement of a gate system that incorporates a congestion-measuring device according to the invention;

FIG. 16A is an illustration showing an arrangement of each of the bus stop areas of a bus service administered by a bus operation system incorporating the congestion measuring system 1; and

FIG. 16B is a diagram showing a bus operation manager used in the bus operation system.

Throughout the drawing, the same elements when shown in more than one figure are designated by the same reference numerals.

DETAILED DESCRIPTION OF THE PREFERRED EMBODIMENTS

We first describe a congestion-measuring device according to the invention, and then describe various devices that incorporate the inventive congestion-measuring device.

Congestion Measuring Device

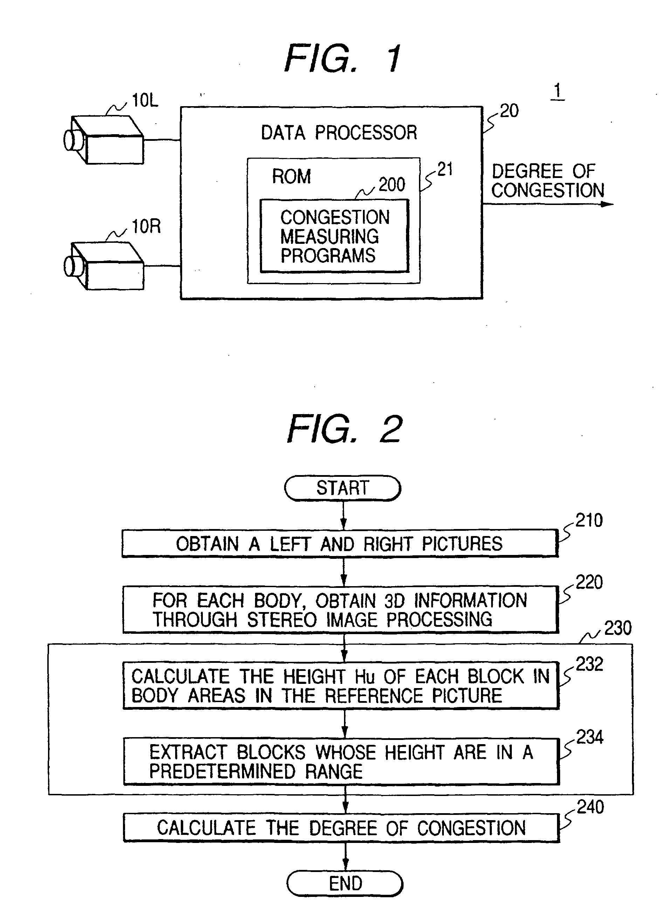

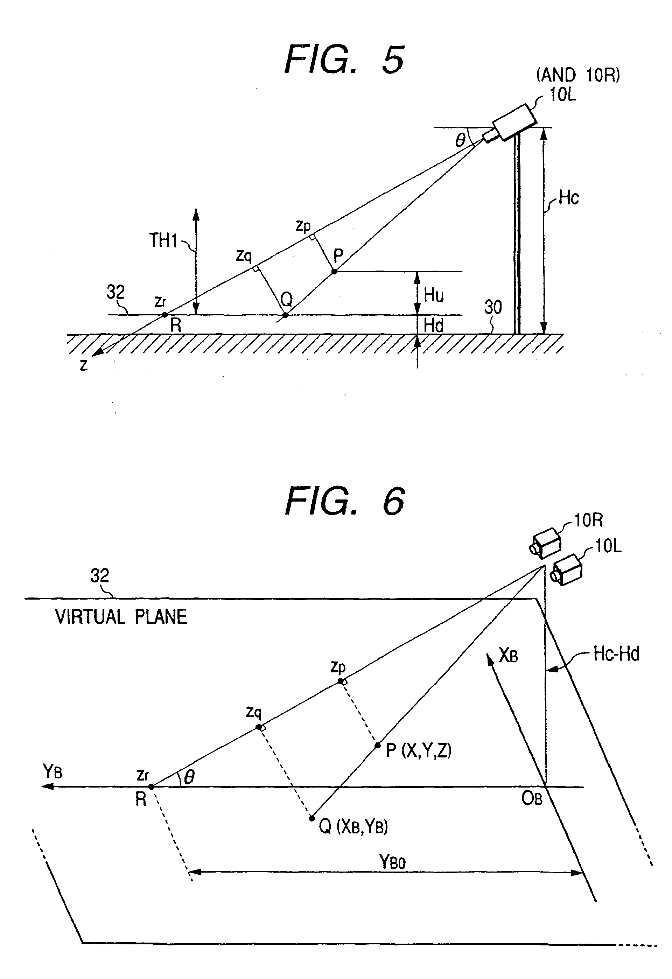

FIG. 1 is a schematic block diagram showing an exemplary arrangement of an illustrative embodiment of a congestion-measuring device according to the principles of the invention. In FIG. 1, the congestion measuring device 1 comprises a pair of video cameras 10L and 10R which are disposed horizontally apart from each other and directed to a desired monitor space (as shown in FIG. 6) and which provide left and right images or pictures (denoted as 11 and 12 in FIG. 2), respectively, taken-in from the monitor space; and a data processor 20 for processing the left picture and the right picture to provide the degree of congestion as an output. The data processor 20 is typically any suitable computer provided with a ROM (read-only memory) 21 that stores congestion measuring programs 200. Alternatively, the data processor 20 may be a device including an electronic circuit comprising integrated circuits (not shown), not-shown ASICs (application specific integrated circuits), etc. In this case, the data processor 20 no longer needs ROM 21 because the congestion measuring programs 200 is incorporated in the ASICs.

Embodiment I

FIG. 2 is a flowchart showing, in a simplified manner, an exemplary procedure of measuring the degree of congestion in accordance with a first illustrative embodiment of the invention. The procedure is executed in the data processor 20 under the control of a congestion-measuring program 200. In FIG. 2, on receiving the left picture 11 and the right picture 12 from the respective cameras 10L and 10R (step 210), the data processor 20 first finds 3D information (i.e., x, y and z-coordinates defined in the monitor space) of each of the bodies in the left and right pictures 11 and 12 by means of stereo image processing in 3D (three-dimensional) measurement step 220. Then, the processor 20 extracts or detects blocks in an area (hereinafter, referred to as "body area") corresponding to a part of each body which part is higher than the virtual plane and lower than a predetermined height from the virtual plane in step 230. The degree of congestion in the monitor space is calculated based on the detected blocks in step 240.

Generally speaking, "3D information" of a point indicates x, y and z-coordinates of the point. However, what is used in the measuring process of the invention is the z coordinate of the point. For this reason, 3D information is used to mean the z coordinate.

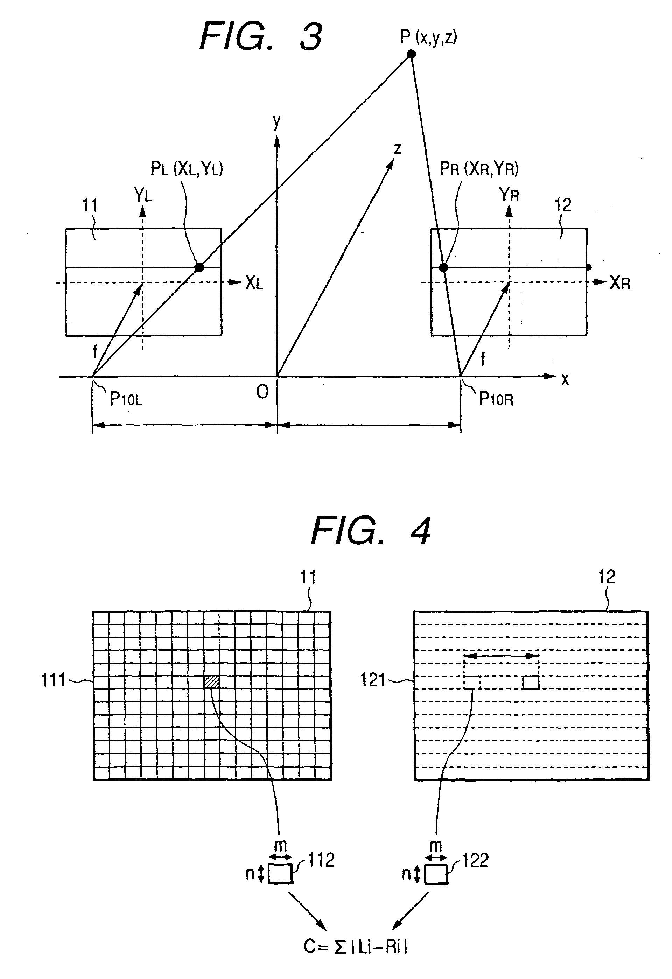

FIG. 3 is a diagram for describing, in detail, the process executed in the 3D-measurement step 220 of FIG. 2. In FIG. 3, the three-dimensional coordinates defined in the real space or monitor space is denoted by x, y and z. The two-dimensional coordinates defined in the left picture 11 by the left camera 10L and the right picture 12 by the right camera 10R are denoted by $(X_L, Y_L)$ and $(X_R, Y_R)$, respectively. Though the two cameras 10L and 10R may be of different kinds having respective specifications, it is assumed, for the sake of the simplicity of the following description, that the two cameras 10 are of the same kind having the focal distance f. It is also assumed that the two cameras 10 are so installed that (1) the middle point between the respective projection centers $P_{10L}$ and $P_{10R}$ of the cameras 10L and 10R coincides with the origin (O) of the x, y, z-coordinate space or device (hereinafter, referred to as "the 3D-coordinate space"), (2) both of the optical axis of the two cameras 10L and 10R are parallel to the z-axis of the 3D-coordinate space, and (3) both of the $Y_L$-axis and the $Y_R$-axis on the picture planes 11 and 12 are parallel to the y-axis of the 3D-coordinate space. Then, the x-axis, the $X_L$-axis and the $X_R$-axis are parallel to each other and exist on an identical plane perpendicular to the pictures 10L and 10R. The distance between the respective projection centers $P_{10L}$ and $P_{10R}$ of the cameras 10L and 10R is expressed as 2a.

A (x, y, z)-coordinate space monitored by a pair of cameras 10L and 10R as described above is called "a monitor space". Accordingly, setting the camera pair 10 is to define the monitor space as described above.

Assume that a point P(x, y, z) in the 3D monitor space, which is regarded as a subspace of the 3D-coordinate space, has its images formed as a point $P_L(X_L, Y_L)$ on the left picture 11 and a point $P_R(X_R, Y_R)$ on the right picture 12. In a 3D measurement by stereo image processing, the real space coordinates (i.e., the (x, y, z) coordinates) of the point P is calculated based on the principles of triangulation by making one picture (e.g., the left picture 11) the reference picture and finding, from the other picture (i.e., the right picture 12 in this specific example), a point which corresponds to a point $P_L$ on the reference picture 11, i.e., $P_R$. It is noted that it follows, from the above-mentioned camera setting conditions (2) and (3), that $Y_L$ equals $Y_R$. That is,

$$Y_L = Y_R \tag{1}$$

On the assumptions stated so far, the monitor space coordinates (x, y, z) of the real point P is calculated from the points $P_L(X_L, Y_L)$ and $P_R(X_R, Y_R)$ on the left 11 and right 12 pictures as follows:

$$x = a(X_L + X_R)(X_L - X_R), \tag{2}$$

$$y = 2aY_L(X_L - X_R), \tag{3}$$

and

$$z = 2af/(X_L - X_R). \tag{4}$$

Solving the equations (2) through (4) with respect to $X_L$ $X_R$ and $Y_L$, we obtain:

$$X_L = (x + a)f/z, \tag{5}$$

$$X_R = (x - a)f/z, \tag{6}$$

and

$$Y_L = Y_R = yf / z, \tag{7}$$

where $X_L - X_R$ is called the parallax and denoted as d (i.e., $d = X_L - X_R$).
Since the length a is a positive real number, it follows, from the equations (5) through (7), that:

$$X_L > X_R \text{ and } Y_L = Y_R \tag{8}$$

This means that the point $P_R$ on the right picture 12 which point corresponds to a point $P_L$ on the reference picture (i. e., the left picture) exists on the same scanning line that includes the point $P_L$ exists and in a range in which $X_L > X_R$. In other words, if a point is identified on one picture (or a reference picture), then a corresponding point on the other picture can be found by searching, for the similarity of image, a limited range ($<X_L$ or $>X_R$) along a scanning line on which the corresponding point possibility exists.

A way of estimating the above-mentioned similarity is described in the following. Specifically, we discuss the method described by Saneyoshi et al., "A Driving Support Device Using Three-Dimensional Image Recognition Technique", The Society of Automotive Engineers of Japan, Inc., Proceedings of Technical Session 924, November 1992, pp. 169-172. FIG. 4 is a diagram showing examples of left picture 11 and right picture 12 obtained through the arrangement of FIG. 3 for illustrating the just-mentioned method. Making the left picture 11 the reference picture, the left picture 11 is divided into blocks of m-by-n pixels. The right picture 12 is divided into horizontal strips of n scanning lines. For each (112) of the divided blocks (referred to as "the current reference block"), a matching block 122, which matches the current reference block 112, is found in the right picture 12 by searching an $X_R$-directional range on the strip 121 of the right picture 12 which strip corresponds to the line (or strip) 111 of blocks which include the current reference block 112. The $X_R$-directional range is smaller than the $X_L$ coordinate of the current reference block 112. The parallax d is calculated from the $X_L$ coordinate of the current reference block 112 and the $X_R$ coordinate of the matching block 122. As an expression for finding a similarity estimating value (C) to determine the matching block 122, the following expression may be used.

$$C = \sum_{i=1}^{m \times n} |L_i - R_i| \qquad \cdots (9)$$

where $L_i$ and $R_i$ are the brightness of the i-th pixel in the current reference block 112 and the current test block 122', respectively. Since the size of the blocks 112 (and accordingly 122') has been set for $m \times n$ pixels in this specific example, the suffix i takes $m \times n$ values 1, 2,....,$m \times n$. Moving the current test block 122' by one pixel at a time, the similarity estimating value C is calculated for the current test block 122' of the time, which is repeated to determine such the current test block 122' as minimizes the similarity estimating value C to be the matching block 122. Finding a matching block 122 (i.e., $X_R$ and $Y_R$) in the right picture 12 for each (i.e., $X_L$ and $Y_L$) of the reference blocks 112 of the left picture 11 in the just-described manner makes it possible to find 3D information such as the parallax d (= $X_L$ - $X_R$) and the x, y, z coordinates for the substance that appears in each reference block 112 and a matching block 122 by using the equations (2) through (4).

As described above, 3D information in a monitor space can be found by stereo image processing. However, the present invention is not limited to the above-described 3D-measuring methods. There have been proposed various 3D-measuring methods other than described above. The invention may be implemented by using, for example, a 3D-measuring method disclosed in Japanese unexamined patent publication No. Hei8-294143 (1996) assigned to the present assignee.

FIG. 5 is a diagram showing the way of extracting a body area for a person or vehicle in a monitor space from 3D information in the monitor space and 3D information in a virtual plane set in the 3D monitor space. In FIG. 5, the cameras 10L and 10R are so set as to cover a desired monitor space (not shown). Numeral 30 denotes the ground or the floor that defines the bottom of the monitor space; and numeral 32 denotes a virtual plane which is set at a height of Hd from the ground 30 and parallel to the ground 30. The cameras 10 are set at a height of Hc from the ground 30 with an angle θ of depression. It is noted that the virtual plane 32 may be set to coincide with the ground 30 surface (that is, Hd = 0). A point R(0, 0, $z_r$) is an intersecting point at which the z-axis intersects the virtual plane 32.

As described above, thus setting the camera pair 10 causes the monitor space to be set so that the z axis of the monitor space runs through the middle point of the two cameras 10L and 10R and in parallel with the optical axes of the cameras 10L and 10R and that the x axis of the monitor space is parallel to the ground 30 (and accordingly the virtual plane 32). For the sake of simplicity of the description, the middle point of the projection centers $P_{10L}$ and $P_{10R}$ of the cameras 10L and 10R is referred to as "the camera position".

If a point P expressed as (x, y, z) in the 3D coordinates exists in the monitor space, then 2D coordinates ($X_L$, $Y_L$) are obtained in the left picture 11 by the camera 10L and 2D coordinates ($X_R$, $Y_R$) are obtained in the right picture 12 by the camera 10R in the above-described manner. The distance, along the optical axis of a reference camera (e.g., the left camera), between the camera position and the point P(x, y, z), i.e., the z coordinate ($z_p$) of the point P is given by equation (4). That is,

$$z_p = 2af/(X_L - X_R) \qquad (10)$$

Preparation of virtual plane chart

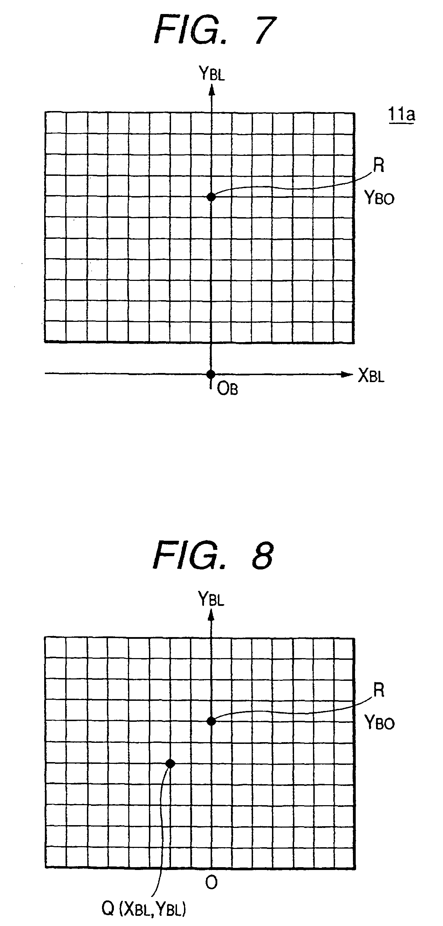

FIG. 6 is a 3D version of FIG. 5. In FIG. 6, an $X_B$- and $Y_B$- coordinate device is set on the virtual plane 32 such that the origin of the $X_B$- and $Y_B$-coordinates is set to the foot ($O_B$) of the perpendicular line drawn from the camera position to the virtual plane 32; the $Y_B$ axis runs through the origin $O_B$ and an intersecting point $Y_{B0}$ at which the z axis of the monitor space intersects the virtual plane 32; and the $X_B$ axis is perpendicular to the $Y_B$ axis. It is assumed that before an actual measurement of the degree of the congestion (e.g., at the time of installation of the congestion measuring device 1), a virtual plane chart is prepared by setting, at a height of Hd, a virtual plane 32 or a chart on which $X_B$ and $Y_B$ scale marks and the intersecting point $Y_{B0}$ is plotted and by taking a left picture 11 of the monitor space. FIG. 7 is a diagram showing an exemplary virtual plane chart obtained by shooting the virtual plane 32. As shown in FIG. 7, the $X_{BL}$ axis may not appear on the virtual plane chart 11a. This is because the $X_B$ axis on the virtual plane 32 may be out of the sight of the cameras 10 (hereinafter referred to as "the stereo camera 10").

Once such a virtual plane chart 11a is prepared, there is no need to use the virtual plane 32 in an actual congestion measurement. FIG. 8 is a diagram showing a combination of the virtual plane chart 11a and a left picture 11 of a monitor space including the point P shown in FIGS. 5 and 6. From FIGS. 6 and 8, it is seen that the distance, along the optical axis of the reference or left camera, between the camera position and an intersecting point Q at which a line defined by the camera position and the point P(x, y, z) intersects the virtual plane 32, i.e., the z coordinate ($z_q$)

of the intersecting point Q is expressed as a function z of the 3D information $Q(X_B, Y_B)$ on the virtual plane 32 (i.e., a function z of the 3D information $Q(X_{BL}, Y_{BL})$ obtained from the combination of the virtual plane chart 11a and a left picture 11) as follows.

$$z_q = z(X_{BL}, Y_{BL}) \tag{11}$$

In this case, the function $z(X_{BL}, Y_{BL})$ is found by means of a technique such as a method of least squares.

Since the height Hc of the stereo camera 10 and the height Hd of the virtual plane 32 from the ground 30 are known, the height Hu of the point P is calculated by the following equation:

$$Hu = (Hc-Hd) \times \{1-(z_p/z_q)\}$$

$$= (Hc-Hd) \times [1-\{z_p/z(X_{BL,} Y_{BL})\}] \tag{12}$$

Referring back to FIG. 2, in step 232, for each block of each body area 40 appearing in the pictures 1 and 12, the height Hu of the body from the virtual plane 32 is calculated according to the equation (12). Then, in the left picture 11 for example, the blocks each height for which is shorter than a predetermined threshold TH1 are extracted from the blocks which correspond to the bodies in the monitor space in step 234. In other words, body area blocks 50 that satisfy the following height conditions that:

$$0 \leqq Hu \leqq TH1$$

are extracted.

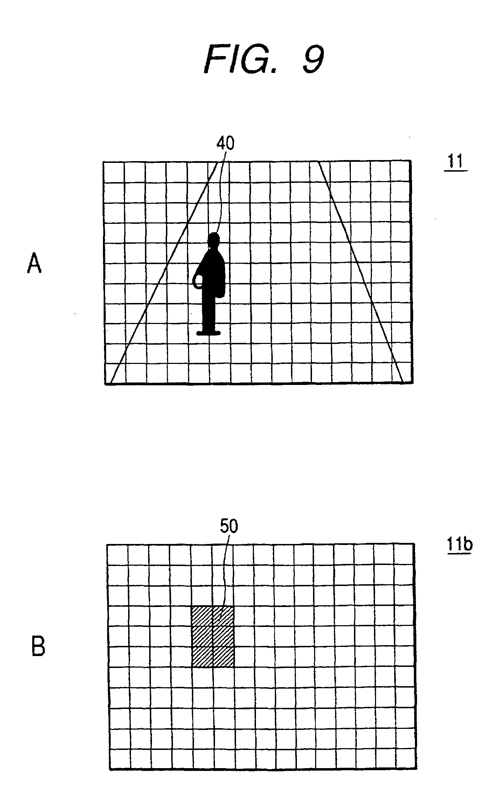

By setting the height Hd for 0.5 meter and the height TH1 for 2 meters, only blocks which correspond to the upper of the body (e.g., blocks 50 in FIG. 9B) can be extracted from a picture as shown in FIG. 9A.

The reason why the virtual plane 32 is set at a height of Hd from the ground 30 is that the congestion measuring device 1 is so configured as to extract only body areas that correspond to a human body without extracting objects other than the human body even if there are a table and/or chairs in the monitor space.

In step 240 of FIG. 2, the processor 20 calculates the degree of convergence. Specifically, block numbers 1, 2,.,., MxN are assigned to respective blocks from the top left block to the bottom right block in the reference picture 11 in which the height Hu of each block have been calculated. For each block j (=1, 2,..,, MxN), a determinant Det(j) is found by judging whether a j-th block in the reference picture 11 is to be extracted or not. The determinant Det(j) is defined, e.g., as follows:

$$Det(j) = \begin{cases} 1 & \text{for a detected block} \\ 0 & \text{for a nondetected block} \end{cases} \cdots (13)$$

By using the determinant Det(j), the degree of congestion, (Sa), is calculated by the expression:

$$Sa = \sum_{j=1}^{M \times N} \alpha_j \bullet Det(j) \qquad \cdots (14)$$

where $\alpha_j$ is a compensation coefficient for compensating the variation in image size of an object or body. The variation depends on the distance from the stereo camera 10, i.e., the z coordinate value of the object.

In this embodiment, a larger value of Sa means a higher degree of congestion, and a smaller value of Sa means a lower degree of congestion. In other word, the congestion measuring device 1 is so configured as to output the degree of congestion which is proportional to the total area of the detected blocks 50 (of FIG. 9B) in the body areas 40 of FIG. 9A.

As described so far, the congestion measuring device 1 measures the degree of congestion on the basis of the area of the images corresponding the parts of the bodies which parts exist between the virtual plane 32 and a predetermined height TH1. This enables the device 1 to not only measure the degree of human or vehicle congestion correctly even when people or vehicles stay still, but also to be free from influence of brightness changes in a video signal which changes are caused by light or shade falling-in to the monitor space.

Embodiment II

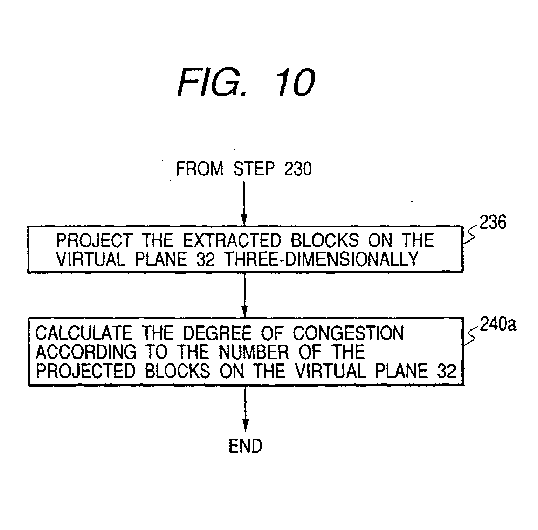

FIG. 10 is a diagram showing steps which, when combined with FIG. 2, constitute a flowchart of an exemplary procedure of measuring the degree of congestion in accordance with a second illustrative embodiment of the invention. After step 230, the processor 21 projects the detected blocks 50 of the FIG. 9B on the virtual plane 32 in step 236. Then the controller 20 calculates the degree of congestion on the basis of the number of projected blocks on the virtual plane 32 in step 240a, and ends the congestion measuring operation.

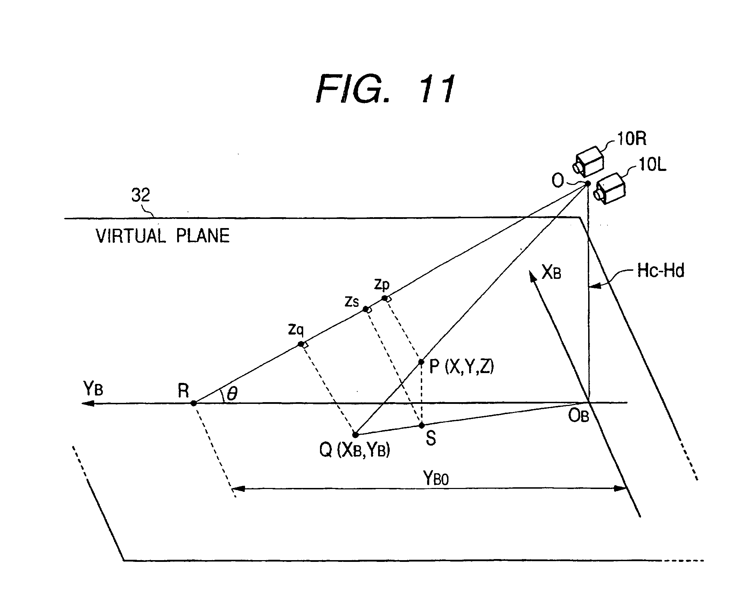

FIG. 11 is a diagram showing, in three dimensions, the process of recognizing the object to be taken into account for determining the degree of congestion according to the second illustrative embodiment of the invention. FIG. 11 is identical to FIG. 5 except that a new point S has been added to FIG. 11. The point S is a foot of a perpendicular line drawn from the body point P to the virtual plane 32. The z coordinate $z_s$ of the point S can be express by using the z coordinate $z_p$ of the point P, the height Hu of the point P from the virtual plane 32, and the camera angle $\theta$ of depression in the following manner:

$$z_s = z_P + Hu \cdot \sin \theta \qquad (15)$$

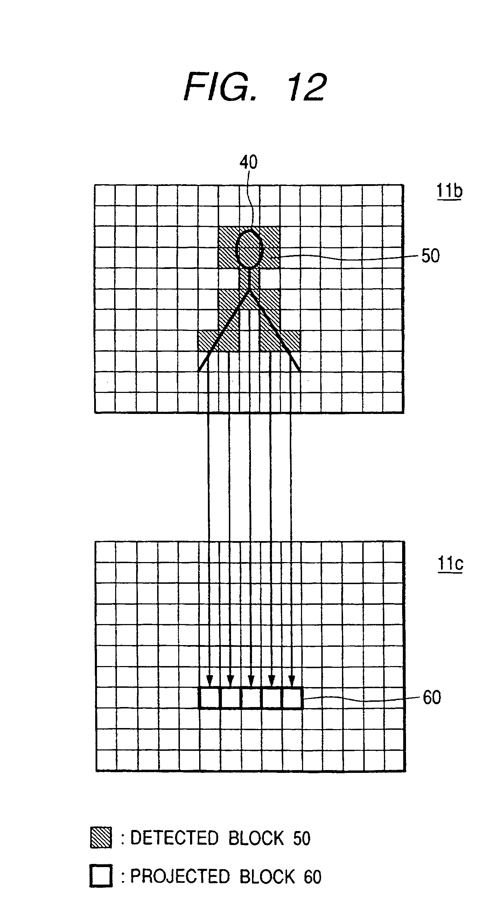

Accordingly, the point S can be expressed by the $X_B$- and $Y_B$- coordinate values by calculating the $z_s$ by using the equation (15) and finding a point which lies on a line segment OQ and has a z coordinate of $z_s$. A block on the virtual plane 32 which block includes the point S is called "a projected block". FIG. 12 is a diagram showing the way of projecting the detected blocks 50 on the virtual plane 32 three-dimensionally. In a detected block map 11b, the detected blocks 50 are indicated by slanting lines. As described above, the blocks that satisfy predetermined height (Hu) conditions are detected or extracted out of the blocks containing the body image 40. The detected blocks 50 are projected on the virtual plane 32, i.e., on a scale-marked projection map 11C in a just described manner. The projected blocks 60 on the virtual plane 32 are drawn in bold lines in the scale-marked projection map 11C.

In order to facilitate the calculation of the degree of congestion, (Sb), we again introduce a determinant, say, Pro(j). The determinant Pro(j) is set to 1 for the projected blocks 60 on the virtual plane 32, and 0 for the other blocks, as follows:

$$Pro(j) = \begin{cases} 1 & \text{for a projected block} \\ 0 & \text{for an unprojected block} \end{cases} \qquad \cdots (16)$$

By using the determinant Pro(j), the degree of congestion, (Sb), is calculated by the expression:

$$Sb = \sum_{j=1}^{MxN} \beta_j \cdot Pro(j). \qquad \cdots (17)$$

where $\beta_j$ is a compensation coefficient for compensating the variation in image size of an object or body.

According to the second illustrative embodiment of the invention, the congestion measuring device 1, which operates according to the flow defined in FIGS. 2 and 10, measures the degree of congestion on not only by detecting the parts of the bodies which parts exist between the virtual plane 32 and a predetermined height TH1 but also by projecting the detected parts of the bodies on the virtual plane 32 so that the congestion measurement is achieved based on the projected blocks 60.

As seen from FIG. 12, analyzing the detected block map 11b as is done in the first embodiment is analogous to viewing the monitor space along the z axis, whereas analyzing the scale-marked projection map 11C as is done in this embodiment is analogous to viewing the monitor space from above the monitor space. Therefore, a congestion-measuring device 1 according to the second embodiment provides a higher-precision measurement result as compared with the first embodiment.

There is no doubt that the second embodiment further has the same advantages as the first one.

Elevator system

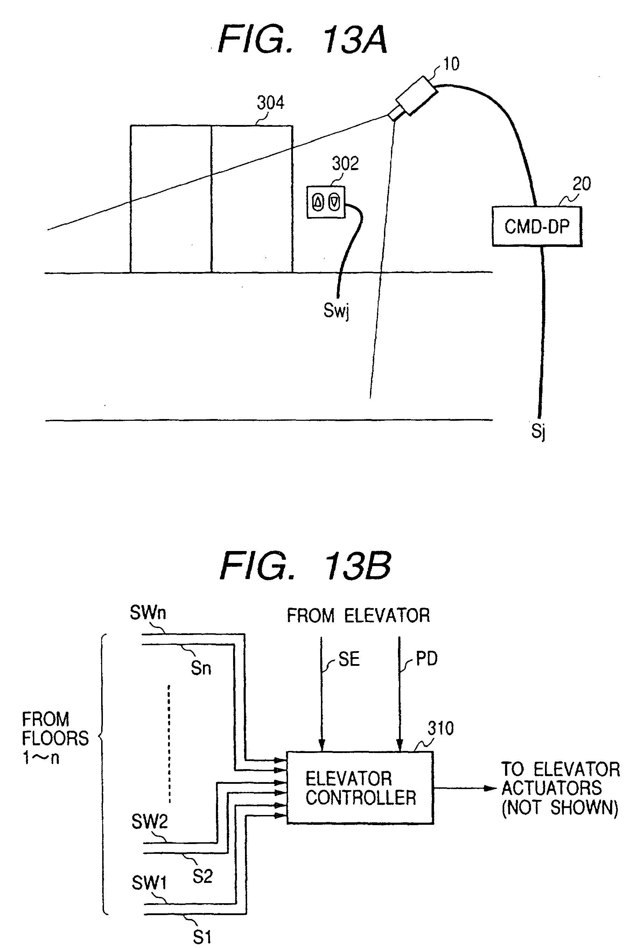

FIG. 13 is an illustration showing an exemplary arrangement of an elevator system that controls the operations of the elevator(s) in response to the degree s of congestion near the elevator doors which degrees are measured by a congestion measuring device according to the invention.

FIG. 13A shows an arrangement of the j-th floor (j=1, 2,... n). Each floor is provided with a console 302 near the elevator door and a stereo camera 10. In this embodiment, the monitor space is a space around the elevator door 304. The stereo camera 10 is so installed as to shoot the monitor space. The output of the camera 10 are supplied to a congestion measuring device-data processor (CMD-DP) 20 according to either first or second illustrative embodiment of the invention.

FIG. 13B is a diagram showing an elevator controller. The elevator controller 310 receives the measurement result Sj and a switch output SWj from each floor. The elevator controller 310 further receives a signal SE indicative of the state of the switch buttons (not shown) provided in the elevator (not shown) and a signal PD indicative of the position and the moving direction of the elevator. On the basis of these signals S1 through Sn, SW1 through SWn, SE and PD, the elevator controller 310 provides output signals to the elevator actuators (not shown) so as to carry people most effectively. Utilizing congestion information for the elevator operation enables the elevator operation to be optimized.

Though we have described a single-elevator system, the invention is also applicable to a multiple-elevator system.

Signal system

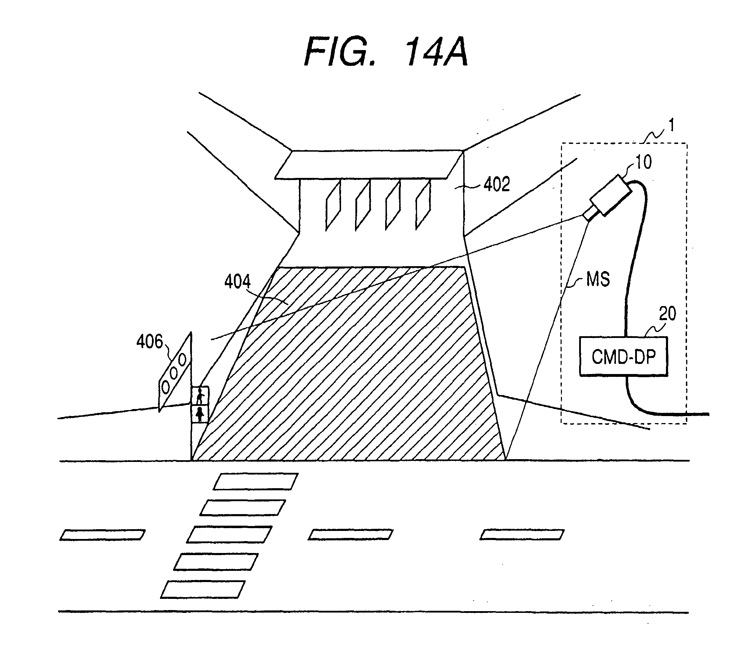

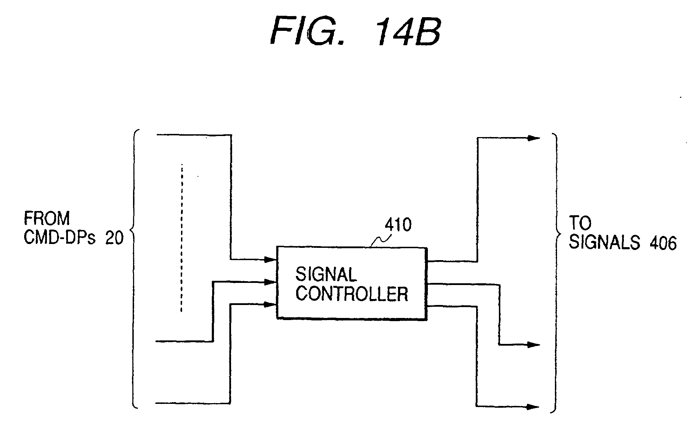

FIG. 14 is an illustration showing an exemplary arrangement of a signal system that controls the signal(s) in response to the degree(s) of congestion near the signal(s) which degrees are measured by a congestion measuring device according to the invention. The signal system is used for controlling the traffic near each of the exits of a facility accommodating masses of people such as a stadium, a concert hole, an event hole, etc.

FIG. 14A shows an arrangement of an exit area. In this system, each of the exit areas 404 near the exits 402 of a facility is a monitor space MS. A signal is provided in the monitor space MS. A stereo camera 10 is so installed as to shoot the monitor space. The output of the camera 10 is supplied to a congestion measuring device-data processor (CMD-DP) 20 according to either first or second illustrative embodiment of the invention.

FIG. 14B shows a signal controller 410. In FIG. 14B, the signal controller 410 collects the degrees of congestion from the inventive CMD-DP 20 and controls the signals 406. According to this embodiment, the signals are controlled based on the degrees of congestion in respective exit areas such that the congestions are effectively resolved.

In this specific embodiment, the degree of congestion of people has been used for the signal control. However, the degree of congestion of vehicles may be used instead of or in addition to the degree of congestion of people.

Gate system

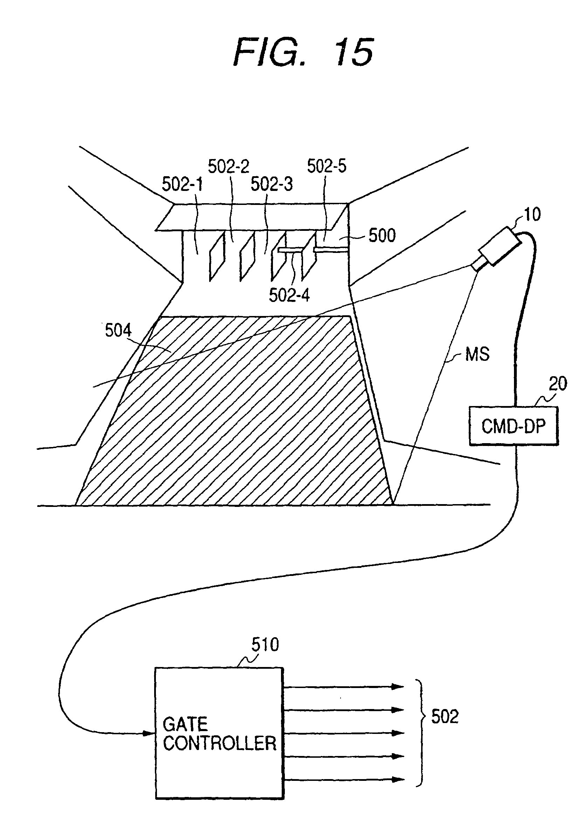

FIG. 15 is an illustration showing an exemplary arrangement of a gate system that controls the gates in response to the degree of congestion near the gates which degrees are measured by a congestion measuring device according to the invention. The gate system is used for controlling a plurality of gates 502-1 through 502-5 provided at each of the entrances 500 of a facility accommodating masses of people such as a stadium, a concert hole, an event hole, etc.

In this system, an entrance area 504 near the entrance 500 of a facility is a monitor space MS. A stereo camera 10 is so installed as to shoot the monitor space MS. The output of the camera 10 is supplied to the congestion measuring device-data processor (CMD-DP) 20, which in turn supplies the degree of congestion at the entrance area to a gate controller 510.

Using the degree of congestion, the gate controller 410 controls the gates 502. According to this embodiment, the gates are controlled based on the degrees of congestion in respective exit areas such that the congestion is effectively resolved. Specifically, the higher the degree of congestion is, the more gates are opened.

The invention has been applied to the gate control. However, the invention may be used for the control of opening and shutting of ticket windows. Utilizing the congestion measuring system 1 for a gate system enables the gate control based on the degree of congestion near the entrance.

Bus operation system

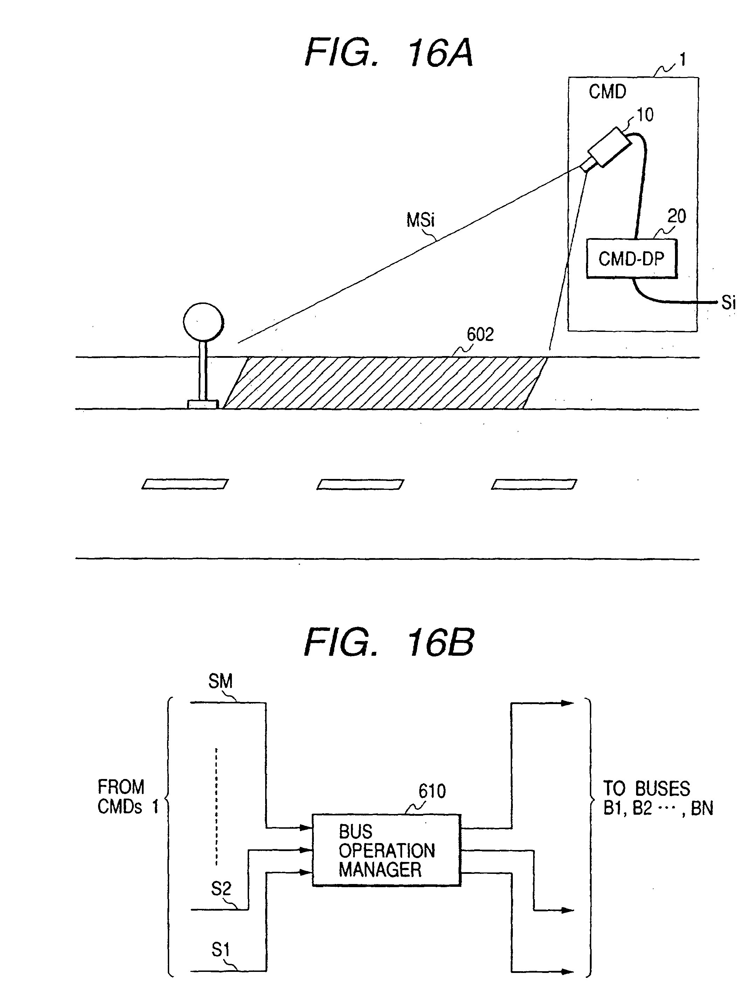

FIG. 16A is an illustration showing an arrangement of each of the bus stop areas of a bus service administered by a bus operation system incorporating the congestion measuring system 1. In FIG. 16A, the bus stop or station area 602 is provided with the congestion measuring system 1. The congestion measuring system 1 measures the degree $(S_i)$ of congestion in the monitor spaces $MS_i$ (i=1, 2,... M) that includes a bus station area 602 where bus-waiting people make a line, where M is the number of bus stations 602 provided with the congestion measuring device 1.

Each of the congestion measuring devices 1 in this system outputs the degree $(S_i)$ of congestion. The signals S1 through SM are supplied to a bus operation manager 610 of FIG. 16B. On the basis of the signals S1 through SM, the bus operation manager 610 outputs control signals or instructions for the buses (not shown) B1, B2, ...BN, where N is the number of available buses.

According to this specific embodiment, the buses are operated on the basis of the degrees of congestion at bus stations. This enables flexible management of the bus operation. For example, the number of active buses can be controlled according to the degree of overall congestion.

The same arrangement may be applied to the management of the train operation based on the degree of congestion at platforms. Also, the same arrangement may be applied to a taxi dispatch management system.

Many widely different embodiments of the present invention may be constructed without departing from the scope of the present invention. It should be understood that the present invention is not limited to the specific embodiments described in the specification, except as defined in the appended claims.

**Claims**

1. A method of measuring a degree of congestion in a space covered by a pair of cameras (10), wherein three-dimensional orthogonal coordinates are defined in the space such that one of the coordinates is parallel with the optical axes of the cameras, a value of the parallel coordinate for any point in the space being referred to as "3D information" of the point, the method comprising the steps of:

   detecting parts of each of body images which parts exist above a virtual plane (32) set at a predetermined height and within a predetermined height from said virtual plane by using first 3D information and second 3D information of each image unit of said body images, said first 3D information being expressed in two-dimensional coordinates on left and right pictures obtained from said cameras, and said second 3D information being expressed in two-dimensional coordinates defined on said virtual plane; and
   calculating said degree of congestion on the basis of said detected parts.

2. A method as defined in claim 1, therein said image units are blocks into which each of said pictures is divided by a predetermined grid and wherein the detecting step includes the steps of:

   identifying said body images in one of said pictures through block matching in said left and right pictures;
   calculating a height of each block of each of said body images in said one picture, said height being expressed in said two-dimensional coordinates defined on said virtual plane; and
   extracting only blocks that exist above said virtual plane (32) and within said predetermined height from said virtual plane.

3. A method as defined in claim 1 or 2, further comprising the step of projecting said detected parts on said virtual plane, wherein said step of calculating said degree of congestion calculates said degree of congestion on the basis of projected parts on said virtual plane.

4. A device for measuring a degree of congestion in a monitor space, wherein three-dimensional orthogonal coordinates are defined in the monitor space, the device comprising:

   a pair of cameras (10) so set as to cover said monitor space, one of the orthogonal coordinates being parallel with the optical axes of said cameras, a value of the parallel coordinate for any point in the space being referred to as "3D information" of the point;
   means (20, 210-230) for detecting parts of each of body images which parts exist above a virtual plane set at a predetermined height and within a predetermined height from said virtual plane by using first 3D information and second 3D information of each image unit of said body images, said first 3D information being expressed in two-dimensional coordinates on left and right pictures obtained from said cameras, and said second 3D information being expressed in two-dimensional coordinates defined on a virtual plane set at a predetermined height; and
means (20, 240 or 240a) for calculating said degree of congestion on the basis of said detecting parts.

**5.** A device as defined in claim 4, therein said image units are blocks into which each of said pictures is divided by a predetermined grid and wherein the detecting means includes:

means (220) for identifying said body images in one of said pictures through block matching in said left and right pictures;
means (232) for calculating a height of each block of each of said body images in said one picture, said height being expressed in said two-dimensional coordinates defined on said virtual plane; and
means (234) for extracting only blocks that exist above said virtual plane (32) and within said predetermined height from said virtual plane.

**6.** A device as defined in claim 4 or 5, further comprising means (20, 236) for projecting said detected parts on said virtual plane, wherein said (20, 240a) means for calculating said degree of congestion calculates said degree of congestion on the basis of projected parts on said virtual plane.

**7.** An elevator system comprising:

at least one elevator;
means, disposed near door(s) of said at least one elevator on each floor, for measuring a degree of congestion near said door(s) in accordance with a method as defined in any of claims 1 through 3;
means for controlling the operation of said at least one elevator on the basis of said degree of congestion of each floor.

**8.** A signal system comprising:

at least one signal provided near respective exits of a facility accommodating masses of people;
means, so disposed as to monitor each of said exits, for measuring a degree of congestion near said exit in accordance with a method as defined in any of claims 1 through 3;
means for controlling the operation of said at least one signal on the basis of said degree of congestion near each exit.

**9.** A gate control system comprising:

a plurality of gates provided at an entrance of a facility accommodating masses of people;
means, disposed near said entrance, for measuring a degree of congestion near said entrance in accordance with a method as defined in any of claims 1 through 3;
means for controlling the operation of said gates on the basis of said degree of congestion near said entrance.

**10.** A bus service management system for managing a bus service the route of which includes predetermined bus stops, the bus service management system comprising:

means, disposed at each bus stop, for measuring a degree of congestion of bus waiting people at the bus stop in accordance with a method as defined in any of claims 1 through 3;
means, based on said degree of congestion from each bus stop, for providing control outputs for buses available for said bus service; and
means for transmitting said control outputs to respective buses.

**Patentansprüche**

**1.** Verfahren zum Messen eines Grades an Stauung in einem Raum, der durch ein Paar Kameras (10) abgedeckt wird, wobei in dem Raum dreidimensionale orthogonale Koordinaten derart definiert sind, dass eine der Koordinaten parallel zu den optischen Achsen der Kamera ist, wobei ein Wert der parallelen Koordinate für irgendeinen Punkt in dem Raum als "3D-Information" des Punktes bezeichnet wird, wobei das Verfahren die Schritte umfasst:

Detektieren von Teilen jeder Körperabbildung von Körperabbildungen, wobei die Teile oberhalb einer virtuellen Ebene (32), die auf einer vorbestimmten Höhe definiert ist, und innerhalb einer vorbestimmten Höhe von der virtuellen Ebene vorhanden sind, indem erste 3D-Information und zweite 3D-Information von jeder Abbildungseinheit der Körperabbildungen verwendet wird, wobei die erste 3D-Information in zweidimensionalen Koordinaten auf linken und rechten Bildern, die von den Kameras erhalten werden, ausgedrückt wird, und die zweite 3D-Information in zweidimensionalen Koordinaten ausgedrückt wird, die auf der virtuellen Ebene definiert sind, und

Berechnen des Grades an Stauung auf der Grundlage der detektierten Teile.

2. Verfahren nach Anspruch 1, worin die Abbildungseinheiten Blöcke sind, in die jedes der Bilder durch ein vorbestimmtes Gitter unterteilt wird, und wobei der Detektionsschritt die Schritte umfasst:

Identifizieren der Körperabbildungen in einem der Bilder durch Block-Matching in den linken und rechten Bildern,

Berechnen einer Höhe jedes Blockes von jeder der Körperabbildungen in dem einen Bild, wobei die Höhe in den zweidimensionalen Koordinaten, die auf der virtuellen Ebene definiert sind, ausgedrückt wird, und

Extrahieren von lediglich den Blöcken, die oberhalb der virtuellen Ebene (32) und innerhalb der vorbestimmten Höhe von der virtuellen Ebene vorhanden sind.

3. Verfahren nach Anspruch 1 oder 2, das ferner den Schritt umfasst, dass die detektierten Teile auf die virtuelle Ebene projiziert werden, wobei der Schritt des Berechnens des Grades an Stauung den Grad an Stauung auf der Grundlage von auf die virtuelle Ebene projizierten Teilen berechnet.

4. Vorrichtung zum Messen eines Grades an Stauung in einem Überwachungsraum, wobei dreidimensionale orthogonale Koordinaten in dem Überwachungsraum definiert sind, wobei die Vorrichtung umfasst:

ein Paar Kameras (10), um den Überwachungsraum abzudecken, wobei eine der orthogonalen Koordinaten parallel zu den optischen Achsen der Kameras ist, wobei ein Wert der parallelen Koordinate für irgendeinen Punkt in dem Raum als "3D-Information" des Punktes bezeichnet wird,

ein Mittel (20, 210-230) zum Detektieren von Teilen jeder Körperabbildung von Körperabbildungen, wobei die Teile oberhalb einer virtuellen Ebene, die auf einer vorbestimmten Höhe festgelegt ist, und innerhalb einer vorbestimmten Höhe von der virtuellen Ebene vorhanden sind, indem erste 3D-Information und zweite 3D-Information von jeder Abbildungseinheit der Körperabbildungen verwendet wird, wobei die erste 3D-Information in zweidimensionalen Koordinaten auf linken und rechten Bildern, die von den Kameras erhalten werden, ausgedrückt wird, und die zweite 3D-Information in zweidimensionalen Koordinaten, die auf einer virtuellen Ebene, die auf einer vorbestimmten Höhe definiert ist, ausgedrückt wird, und

ein Mittel (20, 240 oder 240a) zum Berechnen des Grades an Stauung auf der Grundlage der detektierten Teile.

5. Vorrichtung nach Anspruch 4, wobei die Abbildungseinheiten Blöcke sind, in die jedes der Bilder durch ein vorbestimmtes Gitter unterteilt ist, und wobei das Detektionsmittel umfasst:

ein Mittel (220) zum Identifizieren der Körperabbildungen in einem der Bilder durch Block-Matching in den linken und rechten Bildern,

ein Mittel (232) zum Berechnen einer Höhe jedes Blockes von jeder der Körperabbildungen in dem einen Bild, wobei die Höhe in den zweidimensionalen Koordinaten, die auf der virtuellen Ebene definiert sind, ausgedrückt wird, und

ein Mittel (234) zum Extrahieren von lediglich den Blöcken, die oberhalb der virtuellen Ebene (32) und innerhalb der vorbestimmten Höhe von der virtuellen Ebene vorhanden sind.

6. Vorrichtung nach Anspruch 4 oder 5, die ferner ein Mittel (20, 236) zum Projizieren der detektierten Teile auf die virtuelle Ebene umfasst, wobei das Mittel (20, 240a) zum Berechnen des Grades an Stauung den Grad an Stauung auf der Grundlage von auf die virtuelle Ebene projizierten Teilen berechnet.

7. Aufzugsystem, umfassend:

zumindest einen Aufzug,

ein Mittel, das in der Nähe einer Tür / von Türen des zumindest einen Aufzuges auf jedem Stockwerk angeordnet ist, um einen Grad an Stauung nahe der Tür / der Türen gemäß einem Verfahren nach einem der Ansprüche 1 bis 3 zu messen,
ein Mittel zum Steuern des Betriebes des zumindest einen Aufzuges auf der Grundlage des Grades an Stauung in jedem Stockwerk.

**8.** Signalsystem, umfassend:

zumindest ein Signal, das in der Nähe jeweiliger Ausgänge eines Gebäudes, das Menschenmassen aufnimmt, bereitgestellt wird,
ein Mittel, das derart angeordnet ist, dass es jeden der Ausgänge überwacht, um einen Grad an Stauung in der Nähe des Ausganges gemäß einem Verfahren nach einem der Ansprüche 1 bis 3 zu messen,
ein Mittel zum Steuern des Betriebes des zumindest einen Signals auf der Grundlage des Grades an Stauung in der Nähe des Ausganges.

**9.** Torsteuerungssystem, umfassend:

eine Vielzahl von Toren, die an einem Eingang eines Gebäudes, das Menschenmassen aufnimmt, vorgesehen sind,
ein Mittel, das in der Nähe des Einganges angeordnet ist, um einen Grad an Stauung nahe des Einganges gemäß einem Verfahren nach einem der Ansprüche 1 bis 3 zu messen,
ein Mittel zum Steuern des Betriebes der Tore auf der Grundlage des Grades an Stauung in der Nähe des Einganges.

**10.** Busdienst-Verwaltungssystem zum Verwalten eines Busdienstes, dessen Fahrstrecke vorbestimmte Bushaltestellen umfasst, wobei das Busdienst-Verwaltungssystem umfasst:

ein Mittel, das an jeder Bushaltestelle angeordnet ist, um einen Grad an Stauung von auf einen Bus wartenden Menschen an der Bushaltestelle gemäß einem Verfahren nach einem der Ansprüche 1 bis 3 zu messen,
ein Mittel, das auf der Grundlage des Grades an Stauung von jeder Bushaltestelle Steuerungsausgänge für Busse, die für den Busdienst verfügbar sind, bereitstellt, und
ein Mittel zum Übertragen der Steuerungsausgänge an jeweilige Busse.

**Revendications**

**1.** Procédé d'un mesure d'un degré d'encombrement dans un espace couvert par une paire de caméra (10); dans lequel des coordonnées orthogonales tridimensionnelles sont définies dans l'espace d'une manière telle qu'une des coordonnées est parallèle aux axes optiques des caméras, une valeur de la coordonnée parallèle pour tout point dans l'espace étant appelée " information tridimensionnelle. " du point, le procédé comprenant les étapes consistant à :

détecter des parties de chacune des images de corps, lesquelles parties existent au-dessus d'un plan virtuel (32) établit à une hauteur prédéterminée et à l'intérieur d'une hauteur prédéterminée à partir dudit plan virtuel en utilisant des premières informations tridimensionnelles et des secondes informations tridimensionnelles de chaque unité d'image des dites images de corps, les dites premières informations tridimensionnelles étant exprimées en coordonnées bi-dimensionnelles sur les images gauches et droites obtenues à partir desdites caméras, et lesdites secondes informations tridimensionnelles étant exprimées en coordonnées bi-dimensionnelles définies sur ledit plan virtuel ; et
Calculer ledit degré d'encombrement sur la base desdites parties détectées.

**2.** En se définissant à la revendication 1, dans lequel lesdites unités d'image sont des blocs dans lesquels chacune des dites images est divisée par une grille prédéterminée et dans lequel l'étape de détection inclut les étapes consistant à :

identifier lesdites images de corps dans une desdites images par l'intermédiaire de la correspondance de bloc dans lesdites images gauche et droite ;
calculer une hauteur de chaque bloc de chacune desdites images de corps dans ladite image, ladite hauteur étant exprimée en lesdites coordonnées bi-dimensionnelles définies sur ledit plan virtuel ; et
extraire que les blocs qui se trouvent au-dessus du dit plan virtuel (32) et à l'intérieur de ladite hauteur prédéterminée à partir dudit plan virtuel.

3. Le procédé selon la revendication 1 ou 2, comprenant 1-2, l'étape consistant à projeter lesdites parties détectées sur ledit plan virtuel, dans lequel ladite étape consistant à calculer ledit degré d'encombrement calcule ledit degré d'encombrement sur la base des parties projetées sur ledit plan virtuel.

4. Le dispositif en mesurant un degré d'encombrement dans un espace de surveillance dans lequel des coordonnées orthogonales tridimensionnelles sont définies dans l'espace de surveillance, le dispositif comprenant :

une paire de caméras (10) positionnée de façon à coùvrir ledit espace de surveillance, une des coordonnées orthogonales étant parallèle aux axes optiques desdites caméras, une valeur de la coordonnée parallèle pour tout point dans l'espace étant appelée " information tridimensionnelle " du point ;
un moyen (20, 210 à 230) pour détecter des parties de chacune des images de corps, lesquelles parties existent au-dessus d'un plan virtuel établi à une hauteur prédéterminée et à l'intérieur d'une hauteur prédéterminée à partir dudit plan virtuel en utilisant les premières informations tridimensionnelles et les secondes informations tridimensionnelles de chaque unité d'image desdites images de corps, lesdites premières informations tridimensionnelles étant exprimées en coordonnées bidimensionnelles sur les images gauches et droites obtenues à partir dudit caméras, et lesdites secondes informations tridimensionnelles étant exprimées en coordonnées bidimensionnelles définies sur un plan virtuel établi à une hauteur prédéterminée ; et
un moyen (20, 240 ou 240a) pour calculer ledit degré d'encombrement sur la base desdites parties de détection.

5. Le dispositif selon la revendication 4, dans lequel lesdites unités d'image sont des blocs dans lesquels chacune desdites images est divisé par une grille prédéterminée et dans lesquelles les moyens de détection comprend :

un moyen (220) pour identifier desdites images de corps dans une desdites images par l'intermédiaire de la correspondance de bloc dans lesdites image.s gauche et droites;
un moyen (232) pour calculer une hauteur de chaque bloc de chacune desdites images de corps dans ladite image, ladite hauteur étant exprimée en lesdites coordonnées bidimensionnelles définies sur ledit plan virtuel ; et
un moyen (234) pour extraire tous les blocs qui existent au-dessus dudit plan virtuel (32) et à l'intérieur de ladite hauteur prédéterminée à partir dudit plan virtuel.

6. Le dispositif selon la revendication 4 ou 5, comprenant en outre, un moyen (20, 236) pour projeter lesdites parties détectées sur ledit plan virtuel, par lequel lesdits moyens (20, 240a) pour calculer ledit degré d'encombrement sur la base des parties projetées sur ledit plan virtuel.

7. Un système d'ascenseur comprenant :

au moins un ascenseur ;
un moyen, disposé près de la porte ou des portes dudit au moins un ascenseur sur chaque étage, pour mesurer un degré d'encombrement de ladite porte ou desdites portes en conformité avec un procédé selon l'une des revendications 1 à 3 ;
Un moyen pour commander l'opération dudit au moins un ascenseur sur la base dudit degré d'encombrement de chaque étage.

8. Le système de signalisation comprenant :

au moins un dispositif de signalisation disposé près des sorties respectives d'une installation ou d'un équipement recevant beaucoup de gens ;
un moyen, disposé de façon à surveiller chacune desdites sorties, pour mesurer un degré d'encombrement près de ladite sortie en conformité avec un procédé selon l'une des revendications 1 à 3 ;
un moyen pour commander le fonctionnement dudit au moins un dispositif de signalisation sur la base dudit degré d'encombrement près de chaque sortie.

9. Le système de commande de porte comprenant :

une pluralité de porte disposé à une entrée d'un équipement recevant beaucoup de gens ;

un moyen, disposé près de ladite entrée, pour mesurer un degré d'encombrement près de ladite entrée en conformité avec un procédé selon l'une des revendications 1 à 3 ;
un moyen pour commander l'opération desdites portes sur la base du degré d'encombrement près de ladite entrée.

10. Le système de gestion le service de bus pour gérer un service de bus, dont le trajet inclut des arrêts de bus prédéterminés, le système de gestion de service de bus comprenant :

un moyen, disposé à chaque arrêt de bus, pour mesurer un degré d'encombrement des gens attendant le bus à l'arrêt de bus en conformité avec le procédé selon l'une des revendications 1 à 3 ;
un moyen, basé sur le degré d'encombrement de chaque arrêt de bus, pour délivrer des sorties de commande pour les bus disponibles pour ledit service de bus ; et
un moyen pour transmettre lesdites sorties de commande aux bus respectifs.

# *FIG. 1*

10L

10R

DATA PROCESSOR 20

1

ROM 200 21

CONGESTION
MEASURING
PROGRAMS

DEGREE OF
CONGESTION

# *FIG. 2*

START

OBTAIN A LEFT AND RIGHT PICTURES 210

FOR EACH BODY, OBTAIN 3D INFORMATION
THROUGH STEREO IMAGE PROCESSING 220

230

CALCULATE THE HEIGHT Hu OF EACH BLOCK IN
BODY AREAS IN THE REFERENCE PICTURE 232

EXTRACT BLOCKS WHOSE HEIGHT ARE IN A
PREDETERMINED RANGE 234

CALCULATE THE DEGREE OF CONGESTION 240

END

## FIG. 3

## FIG. 4

$$C = \Sigma \, |Li - Ri|$$

# FIG. 5

# FIG. 6

VIRTUAL PLANE

## FIG. 7

## FIG. 8

# FIG. 9

A

B

# FIG. 10

FROM STEP 230

PROJECT THE EXTRACTED BLOCKS ON THE
VIRTUAL PLANE 32 THREE-DIMENSIONALLY  236

CALCULATE THE DEGREE OF CONGESTION
ACCORDING TO THE NUMBER OF THE
PROJECTED BLOCKS ON THE VIRTUAL PLANE 32  240a

END

## FIG. 11

# FIG. 12

▨ : DETECTED BLOCK 50

☐ : PROJECTED BLOCK 60

# FIG. 13A

# FIG. 13B

FIG. 14A

# FIG. 14B

FROM
CMD-DPs 20

410

SIGNAL
CONTROLLER

TO
SIGNALS 406

# FIG. 15

# FIG. 16A

CMD 1

10

MSi

CMD-DP 20

Si

602

# FIG. 16B

SM

FROM CMDs 1

S2

S1

BUS OPERATION MANAGER 610

TO BUSES B1, B2 ⋯ , BN

28